# EUROPEAN PATENT SPECIFICATION

(11) **EP 1 172 312 B1**
(45) Date of publication and mention of the grant of the patent: **10.03.2004**
(21) Application number: 01117021.4
(22) Date of filing: 12.07.2001
(51) Int. Cl.: B65G 23/08

(54) **A control method for a roller with a built-in motor**
Steuerungsverfahren einer Rolle mit eingebautem Motor
Méthode de commande d'un rouleau avec moteur incorporé

(30) Priority: 14.07.2000 JP 2000214496
(43) Date of publication of application: 16.01.2002
(73) Proprietor: ITOH ELECTRIC CO., LTD., Kasai-shi, Hyogo-ken (JP)
(72) Inventor: Tachibana, Toshiyuki, Hyogo-ken (JP)
(74) Representative: Glawe, Delfs, Moll & Partner

(56) References cited:
- DE-C- 863 620
- US-A- 3 713 521
- US-A- 4 227 607
- US-A- 4 494 058
- PATENT ABSTRACTS OF JAPAN vol. 2000, no. 23, 10 February 2001 (2001-02-10) & JP 2001 161091 A (ITO DENKI KK), 12 June 2001 (2001-06-12) & EP 1 107 443 A (ITOH ELECTRIC CO. LTD.) 13 June 2001 (2001-06-13)

## Description

The present invention relates to a control method for a roller with a built-in motor equipped with an electromagnetic brake used mainly for driving a belt conveyor.

In a roller with a built-in motor for a conveyor, an electric brake is normally used to stop the rotation. In this method, even when the roller stops being driven, the conveyor can still keep on moving because of an external force. In another method, only an electromagnetic valve is used to stop the rotation of the roller mechanically. This method is also accompanied by a problem; the brake pad easily wears out. In order to avoid such problems, the inventors of the present invention proposed a method for reducing the friction of the friction part by activating an electromagnetic brake after the motor rpm decreases in Japanese Patent Application No. 339967/1999.

Development of high-performance magnets in recent years has led to the realization of compact and high-torque motors. This led to the development of small and high-powered rollers with built-in motors. When a small and high-powered roller with a built-in motor is equipped with an electromagnetic brake, there is a problem of insufficient braking force. For example, when stopping a heavily loaded conveyor in an inclined line, it is difficult to maintain a stopped condition. As a measure to solve this problem, an electromagnetic brake having large stopping power needs to be built in. Such an . electromagnetic brake can be achieved by employing a strong brake spring that presses the friction part. To release such a brake, however, a high-voltage electric current is needed for the electromagnetic coil to increase the attractive force of the electromagnetic coil. This causes another problem: a highly heated electromagnetic coil when the brake is released.

The object of the present invention is to provide a control method for a roller with a built-in motor by employing a strong brake spring and an electromagnetic coil with minimum heat generation, thereby achieving a roller with a built-in motor equipped with an electromagnetic brake having strong stopping power.

The roller with a built-in motor of the present invention is equipped with an electromagnetic brake, which functions as follows. A brake spring presses a friction part to activate the brake in a stopped condition, a run signal causes an electromagnetic coil to be energized, and the attractive force of the electromagnetic coil cancels the pressure on the friction part in resistance to the resilience of the brake spring.

In order to achieve the above objective, in the present invention, when the motor rpm reaches a certain speed, the electromagnetic coil, which has been energized at a constant voltage by the run signal, is turned off and on repeatedly in a short period of time. This lowers the average voltage of the electromagnetic coil and reduces the heat generation of the electromagnetic coil.

According to the control method for a roller with a built-in motor of claim 1, a powerful brake spring is used to obtain a maximum braking force in a roller which is equipped with an electromagnetic brake. According to this method, it is possible to keep the average voltage of the electric current supplied to the electromagnetic brake for releasing the brake, therefore it is possible to reduce heat generation of the electromagnetic coil. When this method is applied in a roller equipped with a compact and powerful motor and such a roller is used in a conveyor that needs to be stopped in an inclined condition while loaded, such a conveyor can maintain a stopped condition safely.

According to the invention described in claim 2, the brake parts are not activated in a heavily loaded high rpm condition. Instead, the brake is applied after the rotation of the roller decelerates to a certain level. As such, the wear of the brake can be effectively prevented.

### [EMBODIMENTS OF THE INVENTION]

Embodiments of the present invention will now be explained with reference to the accompanying drawings.

FIG. 1 shows longitudinal section views of an example of a roller with a built-in motor.

FIG. 2 shows longitudinal section views of an electromagnetic brake used in a roller with a built-in motor, illustrating relative positions of the electromagnetic coil and the electromagnetic plate.

FIG. 3 is a timing chart illustrating the working condition of a brushless motor and the timing for controlling electricity supply to the electromagnetic coil.
1: external tube
2: brushless motor
2a: rotor shaft
2b: output part
3: reduction gear
4: fixed shaft
5: bearing
6: fixed tube
7: electromagnetic brake
8: inner disk
9: outer disk
10: electromagnetic plate
11: brake spring
12: electromagnetic coil

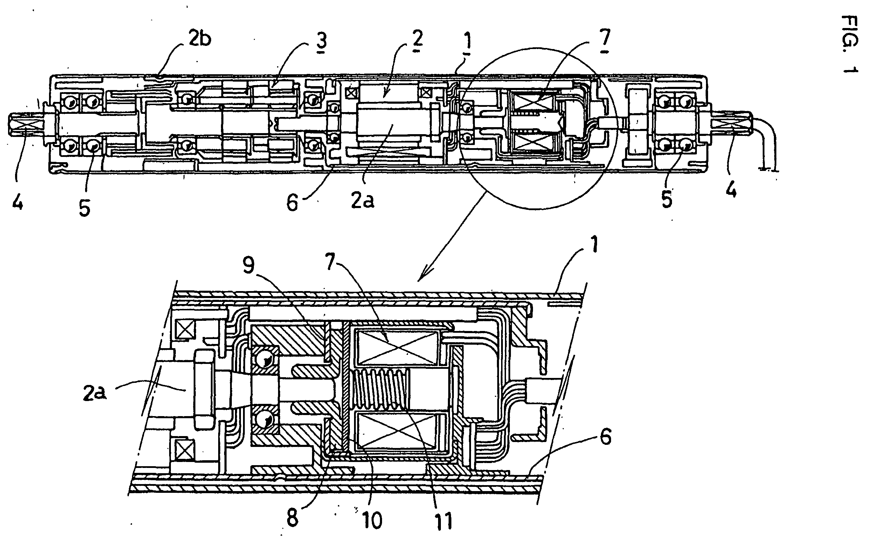

FIG. 1 shows a longitudinal section view of an example of a roller with a built-in motor. This roller has a brushless motor 2 built inside its external tube 1. The rotation of the rotor shaft 2a of the brushless motor 2 is transmitted to the external tube 1 from an output part 2b via a reduction gear 3. The roller is attached to the conveyor via fixed shafts 4. The external tube 1, which is linked to the rotor shaft 2a, rotates around the fixed shafts 4. Between the external tube 1 and the fixed shafts 4, bearings 5 are provided to smooth the rotation. Inside the external tube 1, there is a fixed tube 6, which is provided with an electromagnetic brake 7 for stopping the rotation of the rotor shaft 2a physically.

FIG. 1 also shows an enlarged view of the electromagnetic brake 7 inside the roller. The electromagnetic brake 7 is equipped with an inner disk 8, which is a friction part, at the tip of the rotor shaft 2a. The inner disk 8 is interposed between an outer disk 9, which is a fixed part, and an electromagnetic plate 10, which is freely movable in the axial direction. The electromagnetic plate 10 is pressed against the inner disk 8, i.e., the friction part, by a brake spring 11. At this time, the inner disk 8 is pressed between the outer disk 9 and the electromagnetic plate 10, maintaining the braked condition.

The axially movable electromagnetic plate 10 can be attracted to an electromagnetic coil 12 of the electromagnetic brake 7 to release the brake. When the electromagnetic coil 12 is not energized, the electromagnetic plate 10 is pressed against the inner disk 8 by the resilience of the spring 11, maintaining the braked condition. When the electromagnetic coil 12 is energized and generates a magnetic attraction, the electromagnetic plate 10, which is pressed against the inner disk 8, is attracted to the electromagnetic coil 12 in resistance to the resilience of the spring 11, and the braked condition is released.

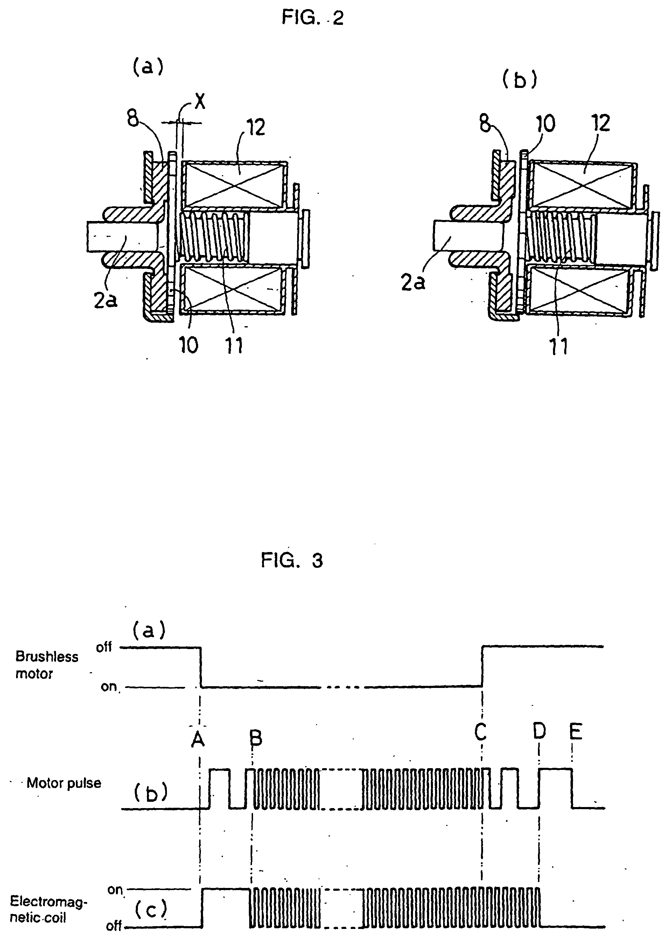

FIG. 3 shows the working condition of the brushless motor and the timing for controlling the electric load for the electromagnetic coil 12. FIG. 3(a) shows the energizing condition for the brushless motor. FIG. 3(b) shows the rotation pulse of the brushless motor that is detected by the motor driver. FIG. 3(c) shows the control condition for the input to the electromagnetic coil. When electricity is not supplied to the brushless motor, the electromagnetic coil is not energized. At this time, the electromagnetic brake is working on the roller, and the motor pulse is stopped.

When the motor is turned on at timing A, the electromagnetic coil is energized, releasing the electromagnetic brake. Then the brushless motor starts rotating and reaches a certain high rpm at timing B. Between timing-A and timing B, a constant voltage is continuously supplied to the electromagnetic coil. When the rpm of the brushless motor reaches a certain level, the electromagnetic coil is turned off and on repeatedly in a short period of time, maintaining the condition in which the electromagnetic brake is released.

To stop the motor, the motor is turned off at timing C. This decelerates the rotation of the motor. At timing D, when the rpm of the motor is reduced to a certain level, the electromagnetic coil is turned off, which activates the electromagnetic brake. This stops the motor completely (timing E), and the roller maintains the condition in which the electromagnetic brake is on.

According to the control method of the present,invention, when the motor is turned on, an electric current of a certain voltage is applied to the electromagnetic coil, and when the motor rpm reaches a certain level, the electric current to the electromagnetic coil is turned off and on repeatedly in a short period of time. Using this method, it is possible to lower the average voltage of the electric current to the electromagnetic coil in a continuous operation of the brushless motor and to reduce heat generation of the electromagnetic coil. In other words, even when a stronger brake spring 11 is used to increase the brake force, it is possible to keep the average voltage of the electric current to the electromagnetic coil in a continuous operation below the allowable heat-generation value.

The reason that the electromagnetic brake remains released when the electric current is supplied to the electromagnetic coil in pulses thereby reducing the average voltage will now be explained with reference to FIG. 2. FIG. 2 shows relative positions of the electromagnetic coil 12 and the electromagnetic plate 10. FIG. 2(a) shows the condition in which the electric current is not supplied to the electromagnetic coil 12 and the brake is- on. FIG. 2(b) shows the condition in which the electric current is supplied to the electromagnetic plate 10 and the brake is released. In FIG. 2(a), the electromagnetic plate 10 is pushed against the inner disk 8 by the brake spring 11. In this condition, there is a clearance of X between the electromagnetic coil 12 and the magnetically attractable surface. In order to attract the electromagnetic plate 10 in resistance to the resilience of the brake spring 11, an electric current of a high voltage needs to be supplied to the electromagnetic coil to obtain huge magnetic attraction. In contrast, when the electromagnetic coil 10 is adhered to the magnetically attractable surface of the electromagnetic coil 12, there is no clearance. In this condition, it is possible to maintain adhesion that is strong enough to resist the resilience of the brake spring with excitation at a relatively low voltage.

The voltage for the electromagnetic coil 12 necessary for releasing the brake from the braking condition and the voltage for the electromagnetic coil 12 necessary for maintaining the condition in which the brake is released vary according to specific designs of the relevant components. In an experiment conducted by the inventors of the present invention, the condition in which the brake is released (the condition in which the electromagnetic plate is attracted) could be maintained at a voltage less than one third of the voltage necessary for releasing the brake from the braked condition. Accordingly, the ratio between the "ON" time and the "OFF" time of the pulses of electric current to the electromagnetic coil can be set anywhere between 1 : 1 or 1 : 2.

To stop the motor, in the control method shown in FIG. 3, an electric current continues to be supplied to the electromagnetic coil even after the motor is turned off at timing C. The electric current to the electromagnetic coil stops only at timing D when the rpm of the motor decreases below a certain level. This method has the effects of preventing a large frictional force applied to the inner disk 8 and of prolonging the life of the roller with a built-in motor by minimizing the wear of the inner disk, which is a friction part.

## Claims

1. A method for controlling a roller with a built-in motor equipped with an electromagnetic brake, in which, in a stopped condition, a brake spring presses a friction part to activate the electromagnetic brake, a run signal causes an electromagnetic coil to be energized, and the attractive force of the electromagnetic coil cancels the pressure on the friction part in resistance to the resilience of the brake spring,
**characterized in that** when the motor rpm reaches a certain speed, the electromagnetic coil, which has been energized at a constant voltage by the run signal, is turned off and on repeatedly in a short period of time to lower the average voltage of the electromagnetic coil.

2. A control method according to claim 1, in which after a stop signal is received, the electromagnetic coil continues to be turned off and on until the motor decelerates to a certain rpm, and stops being energized when the motor rpm reaches the desired rpm, thereby activating the electromagnetic brake.

## Patentansprüche

1. Steuerungsverfahren für eine Rolle mit eingebautem Motor, die mit einer elektromagnetischen Bremse ausgerüstet ist, in welcher in einem gestoppten Zustand eine Bremsfeder einen Reibungsteil presst, um die elektromagnetische Bremse zu aktivieren, ein Laufsignal bewirkt, dass die elektromagnetische Spule gespeist wird und die Anzugskraft der elektromagnetischen Spule den Druck auf den Reibungsteil gegen den Widerstand der Federkraft der Bremsfeder aufhebt,
**dadurch gekennzeichnet, dass** wenn die Motor-Umdrehungszahl eine gewisse Geschwindigkeit erreicht, die elektromagnetische Spule, die durch das Laufsignal mit einer konstanten Spannung gespeist worden ist, in einer kurzen Zeitspanne wiederholt ausund eingeschaltet wird, um die mittlere Spannung der elektromagnetischen Spule zu senken.

2. Steuerungsverfahren nach Anspruch 1, wobei nach dem Empfang des Stoppsignals die elektromagnetische Spule fortgesetzt aus- und eingeschaltet wird, bis der Motor seine Geschwindigkeit auf eine gewisse Umdrehungszahl verringert und die Energiezufuhr gestoppt wird, wenn die Motorumdrehungszahl die gewünschte Umdrehungszahl erreicht, wodurch die elektromagnetische Bremse aktiviert wird.

## Revendications

1. Procédé de commande d'un rouleau avec moteur incorporé équipé d'un frein électromagnétique, dans lequel, dans un état arrêté, un ressort de frein comprime une partie friction pour activer le frein électromagnétique, un signal de marche provoque l'excitation d'une bobine électromagnétique, et la force attractive de la bobine électromagnétique annule la pression sur la partie friction en résistance à la résilience du ressort de frein,
**caractérisé en ce que** lorsque le régime moteur atteint une certaine vitesse, la bobine électromagnétique, qui a été excitée à une tension constante par le signal de marche, est mise hors tension et sous tension de manière répétée dans une courte période de temps, pour abaisser la tension moyenne de la bobine électromagnétique.

2. Procédé de commande selon la revendication 1, dans lequel après qu'un signal d'arrêt a été reçu, la bobine électromagnétique continue d'être mise hors tension et sous tension jusqu'à ce que le moteur ralentisse à un certain régime, et arrête d'être excitée lorsque le régime moteur atteint le régime souhaité, activant ainsi le frein électromagnétique.
